# EUROPEAN PATENT APPLICATION

(11) **EP 2 574 140 A1**
(43) Date of publication of application: **27.03.2013**
(21) Application number: 11840379.9
(22) Date of filing: 07.11.2011
(51) Int. Cl.: H04W 92/08

(54) **METHOD AND DEVICE FOR IDENTIFYING USER CARD**

(30) Priority: 12.11.2010 CN 201010542897
(71) Applicant: Huawei Device Co., Ltd., Longgang District Shenzhen Guangdong 518129 (CN)
(72) Inventor: DING, Ji, Guangdong 518129 (CN)
(74) Representative: Kreuz, Georg Maria
(86) International application number: PCT/CN2011/081860
(87) International publication number: WO 2012/062192

(57) **Abstract**

Embodiments of the present invention provide a method and an apparatus for identifying a user card. The method includes: judging whether the user card has a DFgsm directory and a DFcdma directory; and if both the DFgsm directory and the DFcdma directory exist, reading an identification number EFiccid of the user card, and judging the type of the user card according to the EFiccid to identify the user card. According to the embodiments of the present invention, whether PIN protection is enabled is no longer a restriction for identifying the user card, thereby extending application scenarios, achieving high identification efficiency, and facilitating the implementation of smart card slots by terminal vendors.

## Description

This application claims priority to Chinese Patent Application No. 201010542897.2, filed with the Chinese Patent Office on November 12, 2010 and entitled "METHOD AND APPARATUS FOR IDENTIFYING USER CARD", which is incorporated herein by reference in its entirety.

### FIELD OF THE INVENTION

The present invention relates to the field of communication technologies, and in particular, to a method and an apparatus for identifying a user card.

### BACKGROUND OF THE INVENTION

With the development of communication technologies, there are more and more mobile communication technology standards, for example, GSM and CDMA standards, which are used in the 2G era, and the three technology standards WCDMA, CDMA2000, and TD-SCDMA, which coexist in the current 3G era. In mainland China, three operators use three different 3G standards to provide mobile communication services for users. The 2G network will coexist with the 3G network for a long time; the number of users having more than two mobile numbers is also increasing; and accordingly, dual-mode and even multi-mode terminals are also emerging. Mobile phone manufacturers no longer require users to insert different user cards according to the designed sequence. Instead, adaptive smart card slots are used for user cards.

A technical solution for identifying a card in a card slot of a terminal is provided in the prior art. According to the technical solution, a mobile network code (MNC, Mobile Network Code) and a mobile country code (MCC, Mobile Country Code) in an international mobile subscriber identification number (IMSI, International Mobile Subscriber Identification Number) are obtained by reading EFimsi in a DFgsm directory or EFimsi_m in a DFcdma directory of a card to identify the type of the user card.

However, in the process of implementing the present invention, the inventor finds that the prior art has the following disadvantages: The access condition of EFimsi or EFimsi_m is CHV1, that is, if a user has activated a Personal Identification Number (PIN, Personal Identification Number), the user needs to enter the correct PIN when reading EFimsi or EFimsi_m. Therefore, the identification efficiency is low, and the application scenarios are restricted, which is disadvantageous for terminal vendors to implement smart card slots.

### SUMMARY OF THE INVENTION

Embodiments of the present invention provide a method and an apparatus for identifying a user card, so that whether PIN protection is enabled is no longer a restriction for identifying the user card, thereby extending application scenarios and improving identification efficiency.

To achieve the above objectives, an embodiment of the present invention provides a method for identifying a user card, where the method includes:
judging whether the user card has a DFgsm directory and a DFcdma directory; and
if both the DFgsm directory and the DFcdma directory exist, reading an identification number EFiccid of the user card, and judging the type of the user card according to the EFiccid to identify the user card.

An embodiment of the present invention also provides an identification apparatus for identifying a user card, where the identification apparatus includes:
a judging unit, configured to judge whether the user card has a DFgsm directory and a DFcdma directory; and
an identifying unit, configured to: if both the DFgsm directory and the DFcdma directory exist, read an identification number EFiccid of the user card, and judge the type of the user card according to the EFiccid to identify the user card.

The embodiments of the present invention have the following beneficial effects: The type of the user card is judged according to the DFgsm directory, the DFcdma directory and the EFiccid of the user card. Therefore, whether PIN protection is enabled is no longer a restriction for identifying the user card, thereby extending application scenarios, achieving high identification efficiency, and facilitating the implementation of smart card slots by terminal vendors.

### BRIEF DESCRIPTION OF THE DRAWINGS

The accompanying drawings described herein are provided for further understanding of the present invention, which are a part of the application, but are not intended to limit the present invention. In the drawings:

FIG. 1 is a schematic diagram of an identification method according to an embodiment of the present invention;

FIG. 2 is an exemplary flowchart of an identification method according to an embodiment of the present invention; and

FIG. 3 is a schematic structural diagram of an identification apparatus according to an embodiment of the present invention.

### DETAILED DESCRIPTION OF THE EMBODIMENTS

To make the objectives, technical solutions and merits of the present invention clearer and more comprehensible, the following describes the embodiments of the present invention in more detail with reference to accompanying drawings. The embodiments and related descriptions are used to explain the present invention but do not confine the present invention.

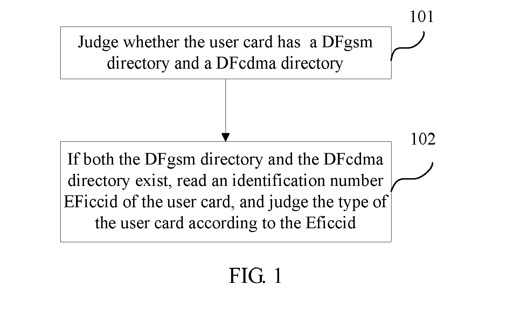

An embodiment of the present invention provides a method for identifying a user card. As shown in FIG. 1, the method includes:

Step 101: Judge whether the user card has a DFgsm directory and a DFcdma directory.

Specifically, the DFgsm and DFcama directories in the user card are read. If the DFgsm directory can be read in the user card, it is determined that the DFgsm directory exists; otherwise, it is determined that the DFgsm directory does not exist. If the DFcdma directory can be read in the user card, it is determined that the DFcdma directory exists; otherwise, it is determined that the DFcdma directory does not exist.

Step 102: If both the DFgsm directory and the DFcdma directory exist, read an identification number EFiccid of the user card, and judge the type of the user card according to the EFiccid to identify the user card.

In this embodiment, the user card may be a GSM single-mode card, a CDMA single-mode card, or a GSM/CDMA dual-mode card. In the user card, the DFgsm directory and files therein are mandatory parameters used in a GSM network; the DFcdma directory and files therein are mandatory parameters used in a CDMA network.

The EFiccid is a unique identification number of the user card. For the user card, contents are stored in a file structure. Each file has a file identifier (file ID, made up of two bytes and normally expressed in hexadecimal notation).

For example, the file ID of the DFgsm is 0x7F20, the file ID of the DFcdma is 0x7F25, and the file ID of the EFiccid is 0x2FE2, where DF refers to a Dedicated File, and EF refers to an Elementary File. The three files exist in an MF (Master File, file ID: 0x3F00) in parallel.

Therefore, the EFiccid may be read according to the file ID; and whether the DFgsm directory and the DFcdma directory exist may be judged according to the returned results of reading the file IDs of the DFgsm directory and the DFcdma directory.

According to GSM11.11 and CCITT Recommendation E.118, the EFiccid includes a country code (CC, County Code) and an issuer identifier number (IIN, Issuer Identifier Number), and recognized operating agencies (ROAs, Recognized Operating Agencies) may be distinguished by using CCs and IINs.

For example, the CC value of 0x86 represents mainland China, the IIN values of 0x00 and 0x02 represent the GSM network of China Mobile, the IIN value of 0x01 represents the GSM network of China Unicom, and the IIN value of 0x03 represents the CDMA network.

In this embodiment, the access conditions of the DFgsm directory, the DFcdma directory, and the EFiccid are all ALWAYS, that is, read operations may be performed without any restrictions. Therefore, the type of the user card may be judged according to the DFgsm directory, the DFcdma directory, and the EFiccid. In this way, no matter whether PIN protection is enabled for the user card, the user card may be identified after reception of a card reset signal, without asking the user to enter a PIN. Therefore, the application scenarios are extended, and high identification efficiency is achieved.

In this embodiment, the judging the type of the user card according to the identification number EFiccid of the user card may specifically include: if the country code CC of the EFiccid is 0x86 and the issuer identifier number IIN is 0x03, determining that the user card is a dual-mode card; otherwise, determining that the user card is a user identity module UIM card.

Further, if the DFgsm directory exists but the DFcdma directory does not exist, it may be determined that the user card is a subscriber identity module SIM card.

Further, if the DFgsm directory does not exist but the DFcdma directory exists, it may be determined that the user card is a user identity module UIM card.

Further, if neither the DFgsm directory nor the DFcdma directory exists, it is determined that the user card is an unknown card.

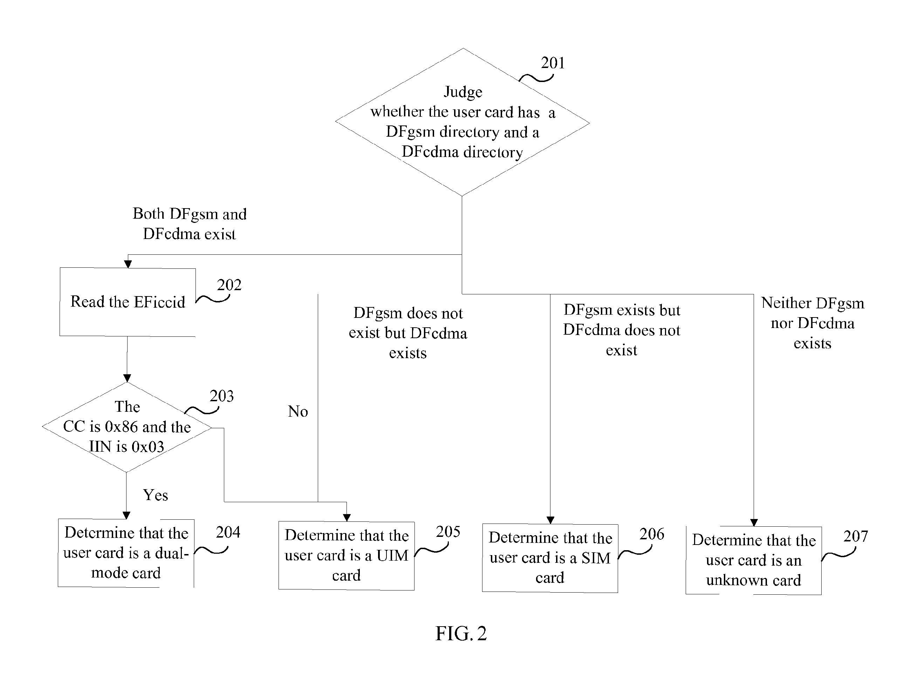

In this embodiment, the preceding steps of judgment are not order-sensitive, and the specific implementation may be determined according to actual conditions. A detailed description of the preceding procedure is provided hereunder by using an example and referring to FIG. 2.

FIG. 2 is an exemplary flowchart of an identification method according to an embodiment of the present invention. As shown in FIG. 2, after a card is reset successfully, the procedure includes the following steps:

Step 201: Judge whether the user card has a DFgsm directory and a DFcdma directory.

Specifically, the DFgsm and DFcama directories in the user card are read. If the DFgsm directory can be read in the user card, it is determined that the DFgsm directory exists; otherwise, it is determined that the DFgsm directory does not exist. If the DFcdma directory can be read in the user card, it is determined that the DFcdma directory exists; otherwise, it is determined that the DFcdma directory does not exist.

If the judgment result is that both the DFgsm directory and the DFcdma directory exist, step 202 is executed to further read an EFiccid.

If the judgment result is that the DFgsm directory does not exist but the DFcdma directory exists, step 205 is executed.

If the judgment result is that the DFgsm directory exists but the DFcdma directory does not exist, step 206 is executed.

If the judgment result is that neither the DFgsm directory nor the DFcdma directory exists, step 207 is executed.

Step 202: Read the EFiccid.

Step 203: Judge whether the CC of the EFiccid is 0x86 and whether the IIN is 0x03. If so, execute step 204; otherwise, execute step 205.

Step 204: Determine that the user card is a dual-mode card.

Step 205: Determine that the user card is a UIM card.

Step 206: Determine that the user card is a SIM card.

Step 207: Determine that the user card is an unknown card.

As can be seen from the above embodiment, the type of the user card is judged according to the DFgsm directory, the DFcdma directory and the EFiccid of the user card. Therefore, whether PIN protection is enabled is no longer a restriction for identifying the user card, thereby extending application scenarios, achieving high identification efficiency, and facilitating the implementation of smart card slots by terminal vendors.

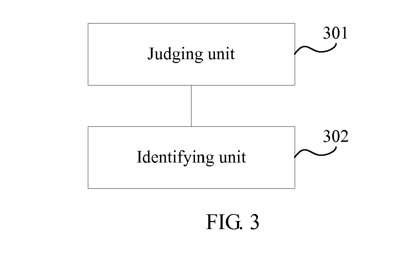

An embodiment of the present invention also provides an apparatus for identifying a user card. As shown in FIG. 3, the identification apparatus includes a judging unit 301 and an identifying unit 302.

The judging unit 301 is configured to judge whether the user card has a DFgsm directory and a DFcdma directory.

Specifically, the DFgsm and DFcama directories in the user card are read. If the DFgsm directory can be read in the user card, it is determined that the DFgsm directory exists; otherwise, it is determined that the DFgsm directory does not exist. If the DFcdma directory can be read in the user card, it is determined that the DFcdma directory exists; otherwise, it is determined that the DFcdma directory does not exist.

The identifying unit 302 is configured to: if both the DFgsm directory and the DFcdma directory exist, read an identification number EFiccid of the user card, and judge the type of the user card according to the EFiccid to identify the user card.

In this embodiment, the identifying unit 302 may be specifically configured to: if a country code CC of the EFiccid is 0x86 and an issuer identifier number IIN is 0x03, determine that the user card is a dual-mode card; otherwise, determine that the user card is a user identity module UIM card.

Further, the identifying unit 302 may be configured to: if the DFgsm directory exists but the DFcdma directory does not exist, determine that the user card is a subscriber identity module SIM card.

Further, the identifying unit 302 may be configured to: if the DFgsm directory does not exist but the DFcdma directory exists, determine that the user card is a user identity module UIM card.

Further, the identifying unit 302 may be configured to: if neither the DFgsm directory nor the DFcdma directory exists, determine that the user card is an unknown card.

As can be seen from the above embodiment, the type of the user card is judged according to the DFgsm directory, the DFcdma directory and EFiccid of the user card. Therefore, whether PIN protection is enabled is no longer a restriction for identifying the user card, thereby extending application scenarios, achieving high identification efficiency, and facilitating the implementation of smart card slots by terminal vendors.

Persons of ordinary skill in the art may further appreciate that, in combination with the examples described in the embodiments herein, units and algorithm steps can be implemented by electronic hardware, computer software, or a combination thereof. In order to clearly describe the interchangeability between the hardware and the software, compositions and steps of every embodiment have been generally described according to functions in the foregoing description. Whether these functions are performed using hardware or software depends on particular applications and design constraints of the technical solutions. A person skilled in the art may use different methods to implement the described functions for each specific application. However, such implementation should not be considered as beyond the scope of the present invention.

The steps of a method or algorithm described in connection with the embodiments disclosed herein may be embodied directly in hardware, in a software module executed by a processor, or in a combination of the two. The software module may be located in a Random Access Memory (RAM), a computer memory, a Read Only Memory (ROM), an Electrically Programmable Read Only Memory (EPROM), an Electrically Erasable Programmable Read Only Memory (EEPROM), a register, a hard disk, a removable disk, a Compact Disk-Read Only Memory (CD-ROM), or any other storage media well-known in the art.

The objectives, technical solutions, and beneficial effects of the present invention have been described in further detail through the above specific embodiments. It should be understood that the above descriptions are merely specific embodiments of the present invention, but not intended to limit the protection scope of the present invention. Any modification, equivalent replacement, or improvement made without departing from the spirit and principle of the present invention should fall within the protection scope of the present invention.

## Claims

1. A method for identifying a user card, comprising:
judging whether the user card has a DFgsm directory and a DFcdma directory; and
if both the DFgsm directory and the DFcdma directory exist, reading an identification number EFiccid of the user card, and judging the type of the user card according to the EFiccid to identify the user card.

2. The method according to claim 1, wherein the judging the type of the user card according to the EFiccid comprises:
if a country code CC of the EFiccid is 0x86 and an issuer identifier number IIN is 0x03, determining that the user card is a dual-mode card; otherwise, determining that the user card is a user identity module UIM card.

3. The method according to claim 1, further comprising: if the DFgsm directory exists but the DFcdma directory does not exist, determining that the user card is a subscriber identity module SIM card.

4. The method according to claim 1, further comprising: if the DFgsm directory does not exist but the DFcdma directory exists, determining that the user card is a user identity module UIM card.

5. The method according to claim 1, further comprising: if neither the DFgsm directory nor the DFcdma directory exists, determining that the user card is an unknown card.

6. An apparatus for identifying a user card, comprising:
a judging unit, configured to judge whether the user card has a DFgsm directory and a DFcdma directory; and
an identifying unit, configured to: if both the DFgsm directory and the DFcdma directory exist, read an identification number EFiccid of the user card, and judge the type of the user card according to the EFiccid to identify the user card.

7. The identification apparatus according to claim 6, wherein the identifying unit is specifically configured to: if a country code CC of the EFiccid is 0x86 and an issuer identifier number IIN is 0x03, determine that the user card is a dual-mode card; otherwise, determine that the user card is a user identity module UIM card.

8. The identification apparatus according to claim 6, wherein the identifying unit is further configured to: if the DFgsm directory exists but the DFcdma directory does not exist, determine that the user card is a subscriber identity module SIM card.

9. The identification apparatus according to claim 6, wherein the identifying unit is further configured to: if the DFgsm directory does not exist but the DFcdma directory exists, determine that the user card is a user identity module UIM card.

10. The identification apparatus according to claim 6, wherein the identifying unit is further configured to: if neither the DFgsm directory nor the DFcdma directory exists, determine that the user card is an unknown card.
